# FASCICULE DE BREVET EUROPEEN

(11) **EP 0 378 024 B1**
(45) Date de publication et mention de la délivrance du brevet: **13.01.1993**
(21) Numéro de dépôt: 89403636.7
(22) Date de dépôt: 22.12.1989
(51) Int. Cl.: B01D 24/22

(54) **Dispositif pour la mise en place et la fixation, sur le plancher d'un filtre, d'organes assurant le transit de fluides à travers le plancher**
Vorrichtung zum Plazieren und Befestigen von Teilen auf einem Filterboden, wobei die Teile den Durchgang von Fluiden durch diesen Filterboden sicherstellen
Device for setting and fastening of parts on filter bottom for securing the fluid transit through the bottom

(30) Priorité: 09.01.1989 FR 8900157
(43) Date de publication de la demande: 18.07.1990
(73) Titulaire: DEGREMONT S.A., F-92508 Rueil-Malmaison Cédex (FR)
(72) Inventeur: Gaudin, Marie-Pierre, F-78100 Saint Germain en Laye (FR); Gilet, Marc, F-92800 Puteaux (FR); Motte, Alain, F-78380 Bougival (FR)
(74) Mandataire: Armengaud Ainé, Alain

(56) Documents cités:
- EP-A- 0 019 655
- EP-A- 0 145 238
- DE-C- 1 044 037
- DE-C- 1 154 792
- FR-A- 1 405 568
- FR-A- 2 596 385
- US-A- 4 084 750

## Description

L'invention concerne un dispositif destiné à la mise en place et à la fixation, sur le plancher d'un filtre, d'organes assurant le transit de fluides à travers le plancher.

L'invention est principalement, mais non exclusivement, destinée à être appliquée aux filtres à matériau filtrant granulaire utilisés en traitement des eaux.

Pour une bonne exploitation d'un filtre de traitement des eaux, il est indispensable d'adapter un mode de lavage efficace du ou des matériaux filtrants. Les modes de lavage utilisés jusqu'à présent nécessitent l'introduction bien répartie au sein de la masse filtrante de fluides de lavage, généralement de l'air et de l'eau.

Pour une meilleure distribution et équirépartition, on a recours à des crépines ou buselures habituellement logées dans la structure supportant le matériau filtrant.

Cette structure, appelée plancher, peut être en particulier en béton armé, et dans ce cas la disposition des réserves pratiquées dans le plancher en vue du logement des buselures exige, au cours de la fabrication du plancher, des interventions délicates et nombreuses. De manière générale, la réserve pour le coulage du trou destiné à recevoir l'orange de fixation de la buselure peut être faite par la mise en place d'appareillages de petite dimension, pouvant être en acier, destinés à être retirés lorsque la prise du béton est faite, puis à être minutieusement nettoyés pour un nouvel emploi ou jetés. De plus, l'ajustement et la fixation de ces éléments demande beaucoup d'attention et de soin.

La présent invention concerne un dispositif constitué de pièces en matière plastique, assemblées facilement, simplifiant à l'extrême l'exécution d'un plancher de filtre à buselures.

Ce dispositif consiste essentiellement en un support, agencé de façon à recevoir la buselure ou l'équivalent, introduit dans un logement déterminé dans le coffrage perdu utilisé pour la fabrication du plancher du filtre, ce logement et le support étant conformés de façon à réaliser la fixation du support dans son logement.

De manière préférée, cette fixation est réalisée mécaniquement et est réversible, par exemple, par encliquetage du support dans son logement.

Les divers caractéristiques et avantages de l'invention apparaîtront de la description qui va suivre d'une de ses formes possible de réalisation, donnée uniquement à titre d'exemple non limitatif.

Au cours de cette description on se réfère au dessin ci-joint sur lequel :

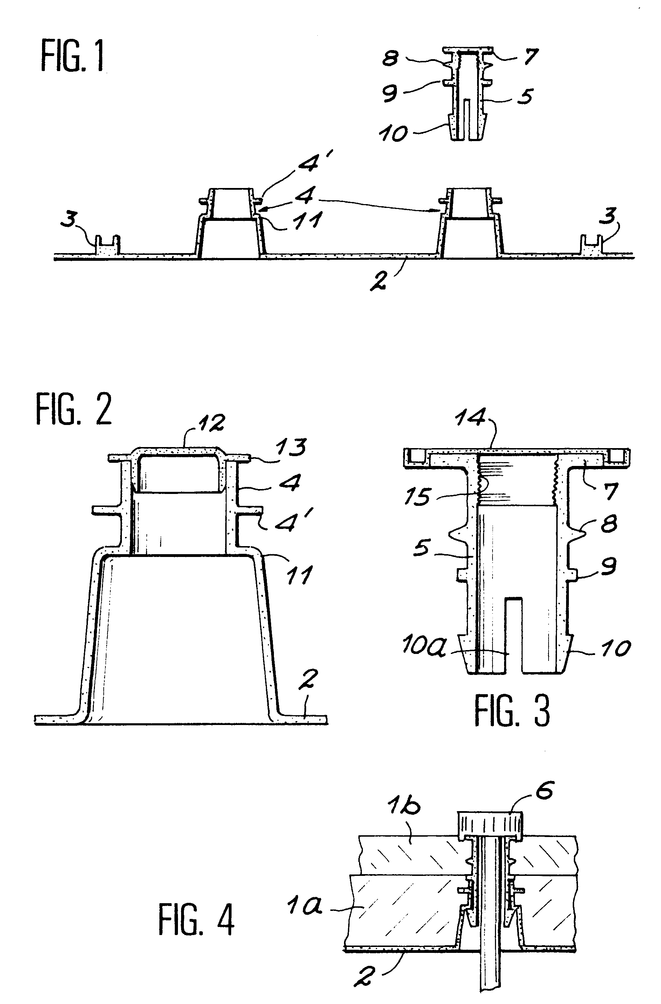

- La Figure 1 est une vue d'ensemble montrant les éléments constitutifs du dispositif,
- La Figure 2 montre à plus grande échelle, le logement du support de buselure, muni de son bouchon,
- La Figure 3 montre, de façon analogue à la Figure 2, le support de buselure avec son bouchon,
- La Figure 4 montre une buselure en place sur le dispositif après terminaison du plancher.

L'exemple traité se rapporte au cas où le plancher du filtre est réalisé conformément au procédé, objet de la demande de brevet européen N° 89400052.0 du 9 Janvier 1989, publiée le 19 Juillet 1989 sous le N° 0 324 673 étant bien entendu que l'invention peut être appliquée à tout plancher obtenu différemment

Dans cet exemple, le plancher du filtre est constitué dans sa première phase, par au moins une prédalle réalisée par coulage d'un béton dit de "première phase" 1a dans un coffrage perdu constitué, en général, d'une pluralité d'éléments 2 en matière plastique, tel que polystyrène, munis de guides 3 de ferraillage.

Suivant l'invention chaque élément 2 est conformé de façon à créer des logements 4 de forme tronconique, régulièrement répartis et présentant un cordon d'ancrage 4′ dans le béton.

Dans ces logements sont introduits les supports 5 de buselure 6. Ces supports, de forme générale cylindrique, présentent successivement, à leur extrémité supérieure un bord 7, sur lequel vient s'appuyer la tête de la buselure, un cordon 8 d'ancrage dans le béton, une butée 9 d'arrêt du support sur le bord de son logement et enfin une découpe 10 susceptible de venir en prise avec un épaulement 11 du logement de façon à réaliser un système d'encliquetage pour la fixation, réversible, du support dans son logement, la réversibilité étant obtenue, dans le cas présent, par des fentes 10a ménagées dans la partie inférieure du support, favorisant la flexibilité de la découpe 10.

Le logement 4, lors de la coulée du béton de première phase, est coiffé d'un bouchon 12 à la surface duquel vient affleurer le béton de première phase. Le bouchon présente un bord 13 laissant dans le béton de première phase une empreinte où vient s'adapter la butée annulaire 9 d'arrêt du support de buselure.

De son côté, le support de buselure, lors de la coulée du béton de "seconde phase" 1b, est muni d'un bouchon 14 dont la tête est élargie et conformée de façon à créer dans le béton une empreinte dans laquelle est reçue la tête de la buselure.

Le dispositif selon l'invention est mis en oeuvre de la façon suivante :
Les éléments du coffrage perdu de la prédalle étant mis en place, on coule le béton de première phase 1a pour l'obtention de la prédalle, après avoir coiffé l'orifice du logement par les bouchons 12.

Ce béton ayant fait prise, on introduit les supports dans leur logement, sans qu'il soit besoin d'utiliser un joint intermédiaire, grâce à l'empreinte laissée dans le béton par le bord du bouchon.

On procède alors au montage des supports dans leur logement en exerçant une pression sur les supports de façon à réaliser l'encliquetage de chaque support dans son logement.

Les supports étant munis de leur bouchon, on coule en une seule fois le béton 1b de seconde phase pour le parachèvement du plancher de filtre.

Ce béton ayant fait prise, on enlève les bouchons des supports de buselure, et on fixe les buselures par simple vissage de la queue, munie d'un filetage (non représenté) de la buselure sur le support, taraudé en 15 de façon correspondante, sans qu'il soit besoin d'interposer un joint d'étanchéité en raison de l'empreinte laissée dans le béton par la tête spécialement conformée du bouchon du support, empreinte dans laquelle vient se loger le rebord périphérique de la tête de la buselure.

Dans le cas de plancher de filtre en béton armé exécuté en une seule phase de coulage, les éléments de coffrage perdu sont munis dès leur approvisionnement sur chantier de supports de buselure. Chaque support est équipé d'un bouchon à sa partie supérieure. Les fonds de coffrage reçoivent le ferraillage de la dalle de béton armé. Ils sont disposés, selon convenance, sur les appuis de la dalle. La découpe aisée ou la juxtaposition des éléments permet de couvrir la totalité de la superficie quelle qu'elle soit. Sur ces éléments, en une seule opération et sans autre préparation, le béton est coulé de manière à exécuter simplement et sans autre intervention le plancher de filtre.

Le dispositif suivant l'invention résout de façon simple et économique, le problème du montage et de la fixation de buselures ou analogues sur un plancher de filtre.

En effet, l'assemblage des éléments constituant de dispositif réduit considérablement le nombre de tâches nécessaires en cours d'exécution et les moyens utilisés simplifient les opérations de montage. Les phases préliminaires et intermédiaires de mise en place de moyens pour créer des réserves destinées à recevoir les buselures sont supprimées.

Le dispositif suivant l'invention élimine les opérations de positionnement, de calage et de réglage des organes destinés à recevoir les buselures. La formation des trous nécessaires au positionnement des supports de buselures est faite automatiquement au cours du coulage du béton armé du plancher. Le support de buselure est directement introduit dans son logement sans opération de nettoyage.

Le mécanisme utilisé pour la fixation de la buselure sur son support autorise un montage et un démontage très aisé de ces pièces. Grâce à l'encliquetage mécanique, le support de buselure est instantanément mis à niveau ; les tolérances d'assemblage étant suffisamment fines pour ne nuire en aucun cas aux fonctions de distribution et de répartition des fluides de lavage.

En outre, les matériaux choisis et l'usinage étudié des pièces améliorent l'adhérence et l'ancrage des éléments dans le béton armé, ce qui réduit avantageusement les risques de désolidarisation. Enfin, le dessin des pièces permet un emboîtage simple et souple des éléments entre eux, constituant ainsi un avantage certain pour leur transport et leur manutention.

## Revendications

1. Dispositif pour la mise en place et la fixation, sur le plancher d'un filtre, d'organes assurant le transit de fluides à travers le plancher, caractérisé en ce qu'il consiste en un support (5), agencé de façon à recevoir l'organe, telle que buselure (6) ou l'équivalent, le support (5) pouvant être introduit dans un logement (4), créé dans le coffrage perdu (2) utilisé pour la fabrication du plancher du filtre, ce logement et le support étant conformés de façon à réaliser la fixation du support dans son logement.

2. Dispositif suivant la revendication 1, caractérisé en ce que le logement et le support sont conformés de façon à réaliser mécaniquement la fixation réversible du support dans son logement.

3. Dispositif suivant la revendication 1, caractérisé en ce que le logement recevant le support de buselure est de forme générale tronconique et présente un épaulement (11) en vue de la fixation par encliquetage du support de buselure dans son logement.

4. Dispositif suivant l'une quelconque des revendications précédentes, caractérisé en ce que le support de buselure présente successivement de bas en haut une découpe (10) coopérant avec l'épaulement (11) présenté par le logement (4) en vue de l'encliquetage du support dans son logement, une saillie annulaire (9) formant butée venant en appui sur le bord supérieur du logement et un rebord sur lequel peut venir s'appuyer la tête de la buselure.

5. Dispositif suivant l'une quelconque des revendications précédentes, caractérisé en ce que la partie inférieure du support présente des fentes (10a) destinées à favoriser la flexibilité de la découpe 10.

6. Dispositif suivant la revendication 1,caractérisé en ce que le support de buselure et le logement de ce support sont munis chacun d'au moins un cordon d'ancrage (8,4′) dans le béton.

7. Dispositif suivant l'une quelconque des revendications 1 et 4, caractérisé en ce que le logement du support de buselure, lors de la coulée du béton constituant la prédalle du plancher du filtre, est coiffé d'un bouchon (12) dont le bord (13) est élargi pour laisser dans le béton une empreinte où la butée annulaire (9) dont est muni le support de buselure peut venir s'appliquer.

8. Dispositif selon l'une quelconque des revendications 1 et 4, caractérisé en ce que, lors de la coulée du béton, le support de buselure est muni d'un bouchon (14) conformé de façon à créer dans le béton une empreinte dans laquelle peut s'inscrire le bord périphérique de la tête de la buselure.

## Patentansprüche

1. Vorrichtung zum Plazieren und Befestigen von Teilen auf einem Filterboden, wobei die Teile den Durchgang von Fluiden durch den Filterboden sicherstellen,
**gekennzeichnet** durch
eine Trägerhülse (5) zur Aufnahme eines solchen Teiles, wie beispielsweise einer Rohrdüse (6) oder dergleichen, wobei die Trägerhülse (5) in einen Lagersitz (4) eingesteckt sein kann, der in einer verlorenen Schalung (2), die zur Herstellung des Filterbodens verwendet wird, gebildet ist, wobei der Lagersitz und die Trägerhülse so ausgebildet sind, daß die Befestigung der Trägerhülse im jeweiligen Lagersitz erfolgt.

2. Vorrichtung nach Anspruch 1,
dadurch **gekennzeichnet**,
daß der Lagersitz und die Trägerhülse so ausgebildet sind, daß auf mechanische Weise eine reversible Befestigung der Trägerhülse im jeweiligen Lagersitz erfolgt.

3. Vorrichtung nach Anspruch 1,
dadurch **gekennzeichnet**,
daß der die Trägerhülse der Rohrdüse aufnehmende Lagersitz im wesentlichen kegelstumpfartig geformt ist und einen Absatz (11) aufweist, der zur Befestigung der Trägerhülse der Rohrdüse im jeueiligen Lagersitz durch eine Rast- oder Schnappverbindung dient.

4. Vorrichtung nach einem der vorstehenden Ansprüche,
dadurch **gekennzeichnet**,
daß die Trägerhülse der Rohrdüse einen sich von unten nach oben erweiternden, einen Hinterschnitt bildenden Abschnitt (10) aufweist, der mit dem Absatz (11) des Lagersitzes (4) in Eingriff kommt und so die Schnapp- oder Rastverbindung der Trägerhülse mit dem Lagersitz bildet, wobei weiter ein ringförmiger Ansatz (9), der einen Anschlag bildet und am oberen Rand des Lagersitzes zur Anlage kommt, und ein Randflansch, an den der Kopf der Verschlußkappe zur Anlage gebracht werden kann, vorgesehen sind.

5. Vorrichtung nach einem der vorstehenden Ansprüche,
dadurch **gekennzeichnet**,
daß der untere Teil der Trägerhülse Schlitze (10a) zur Erhöhung der Flexibilität des hinterschnittenen Abschnittes (10) aufweist.

6. Vorrichtung nach Anspruch 1,
dadurch **gekennzeichnet**,
daß die Trägerhülse der Rohrdüse und der Lagersitz dieser Trägerhülse jeweils mit mindestens einem Profil (8,4′) zur Verankerung im Beton versehen sind.

7. Vorrichtung nach einem der Ansprüche 1 und 4,
dadurch **gekennzeichnet**,
daß der Lagersitz der Trägerhülse der Rohrdüse während des Vergießens des Betons, der die Unterplatte des Filterbodens bildet, mit einem Deckel (12) bedeckt ist, dessen Rand (13) vergrößert ist, um einen Abdruck im Beton zu hinterlassen, an den der ringförmige Anschlag (9) der Trägerhülse der Rohrdüse zur Anlage gebracht werden kann.

8. Vorrichtung nach einem der Ansprüche 1 und 4,
dadurch **gekennzeichnet**,
daß während des Vergießens des Betons die Trägerhülse der Rohrdüse einen Deckel (14) trägt, der so geformt ist, daß er im Beton einen Abdruck hinterläßt, an den der äußere Rand des Kopfes der Rohrdüse zur Anlage gebracht werden kann.

## Claims

1. Apparatus for the putting into place and fixing on the floor of a filter of members ensuring the transit of fluids through said floor, characterized in that it comprises a support (5) arranged so as to be able to receive the member, such as a nozzle (6) or the like whereby the support (5) can be introduced into a recess (4) formed in the permanent shuttering (2) used for the production of the floor of the filter, said recess and the support being shaped so as to fix the support in its recess.

2. Apparatus according to claim 1, characterized in that the recess and the support are shaped in such a way as to mechanically bring about the reversible fixing of the support in its recess.

3. Apparatus according to claim 1, characterized in that the recess receiving the nozzle support has a generally truncated cone shape and has a shoulder (11) for fixing by ratching the nozzle support in its recess.

4. Apparatus according to any one of the preceding claims, characterized in that the nozzle support successively has from bottom to top a cutout (10) cooperating with the shoulder (11) on the recess (4) with a view to the ratching of the support in its recess, an annular projection (9) forming an abutment bearing on the upper edge of the recess and a ledge on which can bear the head of the nozzle.

5. Apparatus according to any one of the preceding claims, characterized in that the lower portion of the support has slots (10a) for aiding the flexibility of the cutout (10).

6. Apparatus according to claim 1, characterized in that the nozzle support and its recess are in each case provided with at least one anchoring cord (8, 4′) in the concrete.

7. Apparatus according to any one of the claims 1 and 4, characterized in that the recess of the nozzle support, during the casting of the concrete constituting the preslab of the filter floor, is covered by a plug (12), whose edge (13) is widened in order to leave in the concrete an impression to which can be applied the annular abutment (9) with which the nozzle support is provided.

8. Apparatus according to either of the claims 1 and 4, characterized in that, during the casting of the concrete, the nozzle support is provided with a plug (14) shaped so as to create in the concrete an impression in which can be inscribed the peripheral edge of the nozzle head.
